# EUROPEAN PATENT APPLICATION

(11) **EP 4 342 737 A1**
(43) Date of publication of application: **27.03.2024**
(21) Application number: 21940174.2
(22) Date of filing: 20.05.2021
(51) Int. Cl.: B60R 11/02, B60Q 3/20

(54) **LOUDSPEAKER HEIGHT-ADJUSTING MECHANISM**

(71) Applicant: Zhejiang Smart Intelligence Technology Co., Ltd., Ningbo, Zhejiang 315336 (CN)
(72) Inventor: JIANG, Jian, Hangzhou Bay New District Ningbo, Zhejiang 315336 (CN); CAI, Hongjie, Hangzhou Bay New District Ningbo, Zhejiang 315336 (CN)
(74) Representative: Zaboliene, Reda
(86) International application number: PCT/CN2021/094923
(87) International publication number: WO 2022/241719

(57) **Abstract**

The present application relates to the technical field of loudspeakers, in particular to a loudspeaker height-adjusting mechanism. The loudspeaker height-adjusting mechanism comprises a mounting bracket, a housing, a loudspeaker and a driving assembly. The mounting bracket is accommodated in the housing; one end of the mounting bracket is used for supporting the loudspeaker, and the other end of the mounting bracket is connected to the driving assembly; the driving assembly drives the mounting bracket to move up and down in the housing; at least two first guiding units are disposed on the mounting bracket, and at least two second guiding units are disposed on the housing; the first guiding units are arranged along the circumferential direction of the mounting bracket; the second guiding units are arranged along the circumferential direction of the housing; the first guiding units are configured to move up and down relative to the second guiding units when the driving assembly drives the mounting bracket to move up and down in the housing. According to the present application, guiding units mating with each other are arranged on the mounting bracket and the housing respectively, so that the guide in a loudspeaker height-adjusting process is realized, a shaking phenomenon in the loudspeaker height-adjusting process is weakened, and noise is reduced.

## Description

### BACKGROUND OF THE APPLICATION

### Field of the Application

The present application relates to the technical field of loudspeakers, in particular to a loudspeaker height-adjusting mechanism.

### Description of Related Art

In order to enhance the high-end and technological feel of car interiors and meet the higher requirements of consumers, a type of height-adjustable car loudspeaker has emerged. This type of loudspeaker is generally installed on the car door panel or dashboard panel, and is in a retracted state when not in use. It extends outward when driving or opening music, changing the appearance of traditional car loudspeakers hidden inside the car. When the car starts, the loudspeaker ascends when driven by a driving mechanism and can be complemented by ambient lights or background music; when the car is turned off, the loudspeaker descends when driven by the driving mechanism, increasing the sense of technology and ceremony, especially favored by many young consumers.

In the existing technical solutions, the loudspeaker may slightly shake and tilt during the height adjustment process, resulting in abnormal noise and severe wear and tear of the loudspeaker.

### BRIEF SUMMARY OF THE APPLICATION

The technical problem to be solved in the present application is that the loudspeaker easily shakes and generates large noise during the height adjusting process.

In order to solve the technical problems described above, the present application discloses a loudspeaker height-adjusting mechanism including a mounting bracket, a housing, a loudspeaker, and a driving assembly, wherein the mounting bracket is accommodated in the housing, one end of the mounting bracket is used to support the loudspeaker, and the other end of the mounting bracket is connected to the driving assembly, the driving assembly drives the mounting bracket to move up and down in the housing;

at least two first guiding units are provided on the mounting bracket, and at least two second guiding units are correspondingly provided on the housing, the first guiding units are arranged along the circumferential direction of the mounting bracket, and the second guiding units are arranged along the circumferential direction of the housing, the first guiding units are such configured that when the driving assembly drives the mounting bracket to move up and down in the housing, the first guiding units move up and down relative to the second guiding units.

Further, the mounting bracket is connected to the driving assembly through a transmission unit.

In an implementable manner, the transmission unit is integrally formed with the mounting bracket.

In another implementable manner, the transmission unit is detachably connected to the mounting bracket.

Further, the driving assembly comprises a driving motor and a driving unit, one end of the driving unit is electrically connected to the driving motor, and the other end of the driving unit is matched with the transmission unit.

In an implementable manner, the transmission unit is a rack structure, and the driving unit is a gear structure.

Further, the housing is further provided with a rack guiding hole, one end of the rack structure is connected to the mounting bracket, and the other end of the rack structure passes through the rack guiding hole.

In an implementable manner, the first guiding unit is a first guiding rod or a first guiding groove, and the second guiding unit is a second guiding groove that matches with the first guiding rod or a second guiding rod that matches with the first guiding groove.

In an implementable manner, the mounting bracket is provided with two first guiding units, and the projection of the two first guiding units on a vertical projection plane and the projection of the driving assembly on the vertical projection plane are non collinear.

In an implementable manner, the mounting bracket and the housing are both made of self-lubricating materials.

By setting guiding units matching with each other on the mounting bracket and the housing respectively in the present application, the guidance of the loudspeaker during the height adjusting process is achieved, thereby reducing the shaking of the loudspeaker during the height adjusting process and reducing noise. Further, the guiding units are directly formed on the mounting bracket and the housing without the need for additional guiding members, making the overall structure of the loudspeaker more compact and occupying less space.

### BRIEF DESCRIPTION OF THE DRAWINGS

In order to more clearly illustrate the technical solutions of the present application, the drawings used below for the description of the embodiments will be introduced briefly. It is obvious that the accompanying drawings in the following description are only some embodiments of the present application. For those skilled in the art, other drawings can be obtained based on these drawings without creative work.
FIG. 1 is a structural schematic diagram of the loudspeaker in the present application;
FIG. 2 is a structural schematic diagram of the loudspeaker in FIG. 1 from another viewing angle;
FIG. 3 is a schematic diagram of the mounting bracket and the housing of the loudspeaker in FIG. 1;
FIG. 4 is a structural schematic diagram of the loudspeaker in FIG. 1 from another viewing angle;
FIG. 5 is another structural schematic diagram of the loudspeaker in the present application;
FIG. 6 is another structural schematic diagram of the loudspeaker in the present application.

In the figures, 1-mounting bracket, 11-first guiding unit, 12-transmission unit, 2-housing, 21-second guiding unit, 22-rack guiding hole, 3-loudspeaker, 4-driving assembly, 41-driving motor, 42-driving unit.

### DETAILED DESCRIPTION OF THE APPLICATION

In order to enable the persons skilled in the art to better understand the present application, the following will provide a clear and complete description of the technical solutions in the embodiments of the present application in conjunction with the accompanying drawings. Obviously, the described embodiments are only part of the embodiments of the present application, not all of them. Based on the embodiments in this application, all other embodiments obtained by ordinary persons skilled in the art without creative work shall fall within the scope of protection in this application.

The terms "one embodiment" or "embodiment" referred to herein refers to specific features, structures, or characteristics that can be included in at least one implementation of the present application. In the description of the present application, it should be understood that the terms "up", "top", "bottom", etc. indicate the orientation or position relationship based on the orientation or position relationship shown in the attached drawings, only for the convenience of describing the present application and simplifying the description, rather than indicating or implying that the device or component referred to must have a specific orientation, be constructed and operated in a specific orientation, and therefore cannot be understood as a limitation of the present application. In addition, the terms "first" and "second" are only used for the purpose of description and cannot be understood as indicating or implying relative importance or implying the quantity of technical features indicated. Therefore, the features being limited to "first" and "second" can explicitly or implicitly include one or more of these features. Moreover, the terms "first", "second", etc. are used to distinguish similar objects without necessarily describing a specific order or sequence. It should be understood that the data used in this way can be interchanged in appropriate cases, so that the embodiments of the present application described here can be implemented in order other than those illustrated or described here.

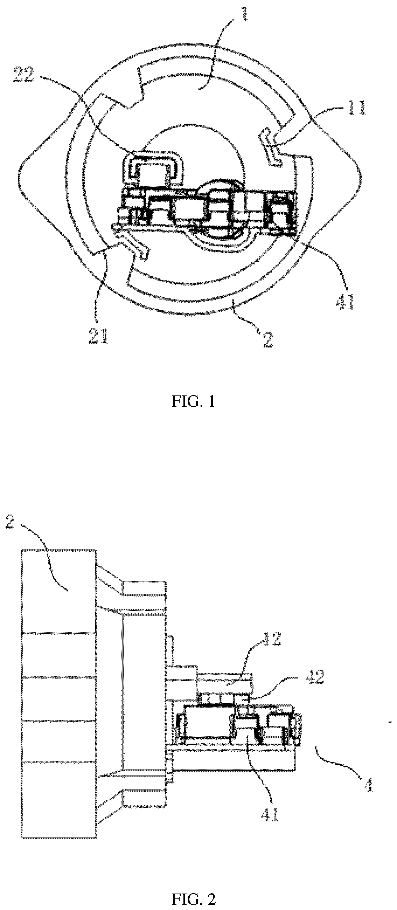

Specifically, the present application discloses a loudspeaker height-adjusting mechanism. As shown in FIGs. 1 to 4, the loudspeaker height-adjusting mechanism includes a mounting bracket 1, a housing 2, a loudspeaker 3, and a driving assembly 4. The mounting bracket 1 is accommodated in the housing 2. One end of the mounting bracket 1 is used to support the loudspeaker 3, and the other end of the mounting bracket 1 is connected to the driving assembly 4. The driving assembly 4 drives the mounting bracket 1 to move up and down in the housing 2.

At least two first guiding units 11 are provided on the mounting bracket 1, and at least two second guiding units 21 are correspondingly provided on the housing 2. The first guiding units 11 are arranged along the circumferential direction of the mounting bracket 1, and the second guiding units 21 are arranged along the circumferential direction of the housing 2. The first guiding units 11 are such configured that when the driving assembly 4 drives the mounting bracket 1 to move up and down in the housing 2, the first guiding units 11 move up and down relative to the second guiding units 21. By setting guiding units matching with each other on the mounting bracket 1 and the housing 2 respectively, the guidance of the loudspeaker 3 during the height adjusting process is achieved, thereby reducing the shaking of the loudspeaker 3 during the height adjusting process and reducing noise. Further, the guiding units are directly formed on the mounting bracket 1 and the housing 2 without the need for additional guiding members, making the overall structure of the loudspeaker 3 more compact and occupying less space.

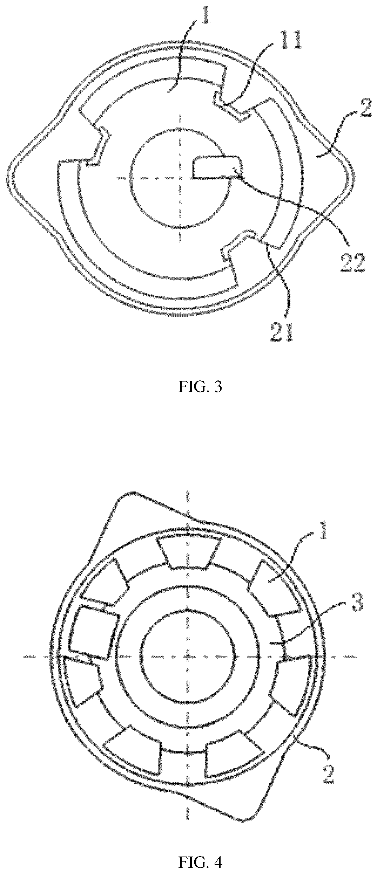

Specifically, as shown in FIG. 3, the first guiding unit 11 is constructed as a guiding groove, and the second guiding unit 21 is constructed as a guiding block that matches with the guiding rod. Preferably, the guiding block protrudes from the inner wall of the housing 2, and the groove depth of the guiding groove is recessed from the outer wall of the mounting bracket 1 towards the direction away from the outer wall of the mounting bracket 1.

Preferably, the mounting bracket 1 is provided with three first guiding units 11, and the projection of the three first guiding units 11 on the vertical projection plane and the projection of the driving assembly 4 on the vertical projection plane are non collinear. When there are two first guiding units 11, the projection of the three first guiding units 11 on the vertical projection plane is set to be non collinear with the projection of the driving assembly 4 on the vertical projection plane, enabling each of the three first guiding units 11 to form an angle with the driving assembly 4, thereby further reducing the shaking of the loudspeaker 3 during the height adjusting process. It can be understood that the vertical projection plane is a plane perpendicular to the rack structure.

Furthermore, the mounting bracket 1 is connected to the driving assembly 4 through a transmission unit 12.

In an implementable manner, the transmission unit 12 is integrally formed with the mounting bracket 1. That is, the transmission unit 12 is directly formed on the mounting bracket 1. By directly forming the transmission unit 12 on the mounting bracket 1, no additional securing members are required, saving the overall space occupied by the loudspeaker 3.

Furthermore, the driving assembly 4 includes a driving motor 41 and a driving unit 42. One end of the driving unit 42 is electrically connected to the driving motor 41, and the other end of the driving unit 42 is matched with the transmission unit 12.

In an implementable manner, the transmission unit 12 is a rack structure, and the driving unit 42 is a gear structure. By using the transmission of rack and gear, compared to the transmission between gear and gear in the existing technology, space is saved.

Furthermore, the housing 2 is further provided with a rack guiding hole 22. One end of the rack structure is connected to the mounting bracket, and the other end of the rack structure passes through the rack guiding hole 22.

In an implementable manner, the mounting bracket 1 and the housing 2 are both made of self-lubricating materials. By using self-lubricating materials to produce the mounting bracket 1 and the housing 2, the first guiding units 11 and the second guiding units 21 can reduce wear during their mutual movement, resulting in smoother movement. Preferably, the self-lubricating materials can be polytetrafluoroethylene, polyacetal, polyoxymethylene, polycarbonate, polyamide, etc.

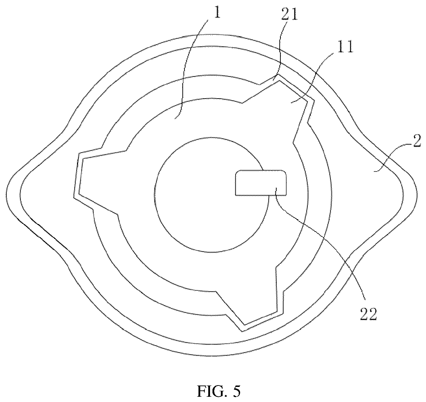

Furthermore, according to another aspect of the present application, another structure of a loudspeaker height-adjusting mechanism is disclosed. Specifically, as shown in FIGs. 2, 4, and 5, the loudspeaker height-adjusting mechanism includes a mounting bracket 1, a housing 2, a loudspeaker 3, and a driving assembly 4. The mounting bracket 1 is accommodated in the housing 2. One end of the mounting bracket 1 is used to support the loudspeaker 3, and the other end of the mounting bracket 1 is connected to the driving assembly 4. The driving assembly 4 drives the mounting bracket 1 to move up and down in the housing 2.

At least two first guiding units 11 are provided on the mounting bracket 1, and at least two second guiding units 21 are correspondingly provided on the housing 2. The first guiding units 11 are arranged along the circumferential direction of the mounting bracket 1, and the second guiding units 21 are arranged along the circumferential direction of the housing 2. The first guiding units 11 are such configured that when the driving assembly 4 drives the mounting bracket 1 to move up and down in the housing 2, the first guiding units 11 move up and down relative to the second guiding units 21. By setting guiding units matching with each other on the mounting bracket 1 and the housing 2 respectively, the guidance of the loudspeaker 3 during the height adjusting process is achieved, thereby reducing the shaking of the loudspeaker 3 during the height adjusting process and reducing noise. Further, the guiding units are directly formed on the mounting bracket 1 and the housing 2 without the need for additional guiding members, making the overall structure of the loudspeaker 3 more compact and occupying less space.

Specifically, the first guiding unit 11 is constructed as a guiding block, and the second guiding unit 21 is constructed as a guiding groove that matches with the guiding block. Preferably, the groove depth of the guiding groove extends from the inner wall of the housing 2 towards the direction near the outer wall of the housing 2, and the guiding block protrudes from the outer wall of the mounting bracket 1 towards the direction away from the outer wall of the mounting bracket 1.

Preferably, in this embodiment, the mounting bracket 1 is provided with three first guiding units 11, and the three first guiding units 11 are arranged along the circumferential direction of the housing 2. The projection of the three first guiding units 11 on the vertical projection plane and the projection of the driving assembly 4 on the vertical projection plane are non collinear. When there are three first guiding units 11, the projection of the three first guiding units 11 on the vertical projection plane is set to be non collinear with the projection of the driving assembly 4 on the vertical projection plane, enabling each of the three first guiding units 11 to form an angle with the driving assembly 4, thereby further reducing the shaking of the loudspeaker 3 during the height adjusting process. It can be understood that the vertical projection plane is a plane perpendicular to the rack structure.

Furthermore, the mounting bracket 1 is connected to the driving assembly 4 through a transmission unit 12.

Furthermore, the transmission unit 12 can be detachably connected to the mounting bracket 1. By detachably connecting the mounting bracket 1 and the transmission unit 12, it is convenient to disassemble and improve the user's replacement experience when the mounting bracket 1 or the transmission unit 12 requires for replacement. Moreover, when any one of the mounting bracket 1 and the transmission unit 12 is damaged, it is only required for replace a single component, without the need for overall structural replacement, thereby saving costs.

Furthermore, the driving assembly 4 includes a driving motor 41 and a driving unit 42. One end of the driving unit 42 is electrically connected to the driving motor 41, and the other end of the driving unit 42 is matched with the transmission unit 12.

In an implementable manner, the transmission unit 12 is a rack structure, and the driving unit 42 is a gear structure. By using the transmission of rack and gear, compared to the transmission between gear and gear in the existing technology, space is saved.

Furthermore, the housing 2 is further provided with a rack guiding hole 22. One end of the rack structure is connected to the mounting bracket, and the other end of the rack structure passes through the rack guiding hole 22.

In an implementable manner, the mounting bracket 1 and the housing 2 are both made of self-lubricating materials. By using self-lubricating materials to produce the mounting bracket 1 and the housing 2, the first guiding units 11 and the second guiding units 21 can reduce wear during their mutual movement, resulting in smoother movement. Preferably, the self-lubricating materials can be polytetrafluoroethylene, polyacetal, polyoxymethylene, polycarbonate, polyamide, etc.

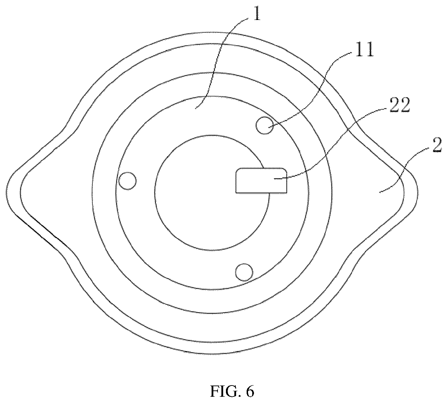

Furthermore, according to another aspect of the present application, another structure of a loudspeaker height-adjusting mechanism is disclosed. Specifically, as shown in FIGs. 2, 4, and 6, the loudspeaker height-adjusting mechanism includes a mounting bracket 1, a housing 2, a loudspeaker 3, and a driving assembly 4. The mounting bracket 1 is accommodated in the housing 2. One end of the mounting bracket 1 is used to support the loudspeaker 3, and the other end of the mounting bracket 1 is connected to the driving assembly 4. The driving assembly 4 drives the mounting bracket 1 to move up and down in the housing 2.

At least two first guiding units 11 are provided on the mounting bracket 1, and at least two second guiding units 21 are correspondingly provided on the housing 2. The first guiding units 11 are arranged along the circumferential direction of the mounting bracket 1, and the second guiding units 21 are arranged along the circumferential direction of the housing 2. The first guiding units 11 are such configured that when the driving assembly 4 drives the mounting bracket 1 to move up and down in the housing 2, the first guiding units 11 move up and down relative to the second guiding units 21. By setting guiding units matching with each other on the mounting bracket 1 and the housing 2 respectively, the guidance of the loudspeaker 3 during the height adjusting process is achieved, thereby reducing the shaking of the loudspeaker 3 during the height adjusting process and reducing noise. Further, the guiding units are directly formed on the mounting bracket 1 and the housing 2 without the need for additional guiding members, making the overall structure of the loudspeaker 3 more compact and occupying less space.

Specifically, the first guiding unit 11 is constructed as a guiding hole, and the second guiding unit 21 is constructed as a guiding rod (not shown) that matches with the guiding hole. Preferably, the guiding hole is provided on the bottom plate of the mounting bracket 1, and the second guiding rod 21 is provided on the bottom plate of the housing 2.

Preferably, in this embodiment, the mounting bracket 1 is provided with three first guiding units 11, and the three first guiding units 11 are arranged along the circumferential direction of the housing 2. The projection of the three first guiding units 11 on the vertical projection plane and the projection of the driving assembly 4 on the vertical projection plane are non collinear. When there are three first guiding units 11, the projection of the two first guiding units 11 on the vertical projection plane is set to be non collinear with the projection of the driving assembly 4 on the vertical projection plane, enabling the three first guiding units 11 to form an angle with the driving assembly 4, thereby further reducing the shaking of the loudspeaker 3 during the height adjusting process. It can be understood that the vertical projection plane is a plane perpendicular to the rack structure.

Furthermore, the mounting bracket 1 is connected to the driving assembly 4 through a transmission unit 12.

Furthermore, the transmission unit 12 can be detachably connected to the mounting bracket 1. By detachably connecting the mounting bracket 1 and the transmission unit 12, it is convenient to disassemble and improve the user's replacement experience when the mounting bracket 1 or the transmission unit 12 requires for replacement. Moreover, when any one of the mounting bracket 1 and the transmission unit 12 is damaged, it is only required for replace a single component, without the need for overall structural replacement, thereby saving costs.

Furthermore, the driving assembly 4 includes a driving motor 41 and a driving unit 42. One end of the driving unit 42 is electrically connected to the driving motor 41, and the other end of the driving unit 42 is matched with the transmission unit 12.

In an implementable manner, the transmission unit 12 is a rack structure, and the driving unit 42 is a gear structure. By using the transmission of rack and gear, compared to the transmission between gear and gear in the existing technology, space is saved.

Furthermore, the housing 2 is further provided with a rack guiding hole 22. One end of the rack structure is connected to the mounting bracket, and the other end of the rack structure passes through the rack guiding hole 22.

In an implementable manner, the mounting bracket 1 and the housing 2 are both made of self-lubricating materials. By using self-lubricating materials to produce the mounting bracket 1 and the housing 2, the first guiding units 11 and the second guiding units 21 can reduce wear during their mutual movement, resulting in smoother movement. Preferably, the self-lubricating materials can be polytetrafluoroethylene, polyacetal, polyoxymethylene, polycarbonate, polyamide, etc.

The above are only preferred embodiments of the present application and are not intended to limit the present application. Any modifications, equivalent replacements, improvements, etc. made within the spirit and principles of the present application shall be included in the scope of protection of the present application.

## Claims

1. A loudspeaker height-adjusting mechanism comprising a mounting bracket (1), a housing (2), a loudspeaker (3), and a driving assembly (4), wherein the mounting bracket (1) is accommodated in the housing (2), one end of the mounting bracket (1) is used to support the loudspeaker (3), and the other end of the mounting bracket (1) is connected to the driving assembly (4), the driving assembly (4) drives the mounting bracket (1) to move up and down in the housing (2);
at least two first guiding units (11) are provided on the mounting bracket (1), and at least two second guiding units (21) are correspondingly provided on the housing (2), the first guiding units (11) are arranged along the circumferential direction of the mounting bracket (1), and the second guiding units (21) are arranged along the circumferential direction of the housing (2), the first guiding units (11) are such configured that when the driving assembly (4) drives the mounting bracket (1) to move up and down in the housing (2), the first guiding units (11) move up and down relative to the second guiding units (21).

2. The loudspeaker height-adjusting mechanism as claimed in claim **1,** wherein the mounting bracket (1) is connected to the driving assembly (4) through a transmission unit (12).

3. The loudspeaker height-adjusting mechanism as claimed in claim **2,** wherein the transmission unit (12) is integrally formed with the mounting bracket (1).

4. The loudspeaker height-adjusting mechanism as claimed in claim **2,** wherein the transmission unit (12) is detachably connected to the mounting bracket (1).

5. The loudspeaker height-adjusting mechanism as claimed in claim **3** or **4,** wherein the driving assembly (4) comprises a driving motor (41) and a driving unit (47), one end of the driving unit (47) is electrically connected to the driving motor (41), and the other end of the driving unit (47) is matched with the transmission unit (12).

6. The loudspeaker height-adjusting mechanism as claimed in claim **5,** wherein the transmission unit (12) is a rack structure, and the driving unit (47) is a gear structure.

7. The loudspeaker height-adjusting mechanism as claimed in claim **6,** wherein the housing (2) is further provided with a rack guiding hole (22), one end of the rack structure is connected to the mounting bracket, and the other end of the rack structure passes through the rack guiding hole (22).

8. The loudspeaker height-adjusting mechanism as claimed in claim **1,** wherein the first guiding unit (11) is a first guiding rod or a first guiding groove, and the second guiding unit (21) is a second guiding groove that matches with the first guiding rod or a second guiding rod that matches with the first guiding groove.

9. The loudspeaker height-adjusting mechanism as claimed in claim **1,** wherein the mounting bracket (1) is provided with two first guiding units (11), and the projection of the two first guiding units (11) on a vertical projection plane and the projection of the driving assembly (4) on the vertical projection plane are non collinear.

10. The loudspeaker height-adjusting mechanism as claimed in claim **1,** wherein the mounting bracket (1) and the housing (2) are both made of self-lubricating materials.
